(19) Europäisches Patentamt
European Patent Office
Office européen des brevets

(11) **EP 2 634 309 B1**

(12) **EUROPÄISCHE PATENTSCHRIFT**

(45) Veröffentlichungstag und Bekanntmachung des Hinweises auf die Patenterteilung:
**25.04.2018   Patentblatt 2018/17**

(51) Int Cl.:
*D21H 21/36* *(2006.01)*        *D21H 21/40* *(2006.01)*

(21) Anmeldenummer: **13000043.3**

(22) Anmeldetag: **07.01.2013**

(54) **Sicherheitspapier**

Security paper

Papier de sécurité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2012   DE 102012004127**

(43) Veröffentlichungstag der Anmeldung:
**04.09.2013   Patentblatt 2013/36**

(73) Patentinhaber: **Giesecke+Devrient Currency Technology GmbH**
**81677 München (DE)**

(72) Erfinder:
• **Otto, Daniela**
  **81669 München (DE)**
• **Schiffmann, Peter**
  **81673 München (DE)**
• **Liebler, Ralf**
  **83727 Schliersee (DE)**

(56) Entgegenhaltungen:
| | |
|---|---|
| EP-A1- 2 314 459 | EP-A2- 0 799 928 |
| WO-A1-2004/072378 | WO-A1-2006/049478 |
| DE-A1-102009 054 406 | DE-U1-202005 020 859 |
| GB-A- 2 480 275 | US-A- 5 660 919 |
| US-A1- 2005 031 838 | US-A1- 2008 305 702 |

**Beschreibung**

Die Erfindung betrifft ein Sicherheitspapier zur Herstellung von Wertdokumenten, wie Banknoten, Ausweisdokumenten oder Urkunden, mit einem flächigen Substrat, das zumindest teilweise mit einer schmutzabweisenden, antimikrobiellen Beschichtung versehen ist, um die Lebensdauer und Umlauffähigkeit zu verlängern und eine Gefährdung der Benutzer durch pathogene Mikroorganismen zu verringern. Die Erfindung betrifft auch ein Wertdokument mit einem derartigen Sicherheitspapier sowie ein Verfahren zur Herstellung des Sicherheitspapiers und des Wertdokuments.

Banknoten und andere Wertdokumente werden üblicherweise aus sogenannten Sicherheitspapieren gefertigt, die Sicherheitsmerkmale, wie einen teilweise in das Papier eingebrachten Sicherheitsfaden, einen Folienpatch mit Beugungsstrukturen oder Brechungsstrukturen, Farbkippeffekten oder mikrooptischen Darstellungsanordnungen, oder Wasserzeichen aufweisen. Außerdem sind die Wertdokumente typischerweise bedruckt, wobei oft aufwendige Druckbilder mit technisch anspruchsvollen Druckverfahren, beispielsweise Stichtiefdruck, erzeugt werden. Ferner zeichnen sich Wertdokumente, wie beispielsweise Banknoten, auch noch durch einen teils durch das Papiersubstrat, teils durch dessen Behandlung (wie einseitige oder zweiseitige Kalandrierung bei dem Stahlstichtiefdruck) bedingten Charakter aus, nämlich ihre Griffigkeit und ihre Biegesteifigkeit und den beim Verformen und Knittern charakteristischen Klang.

Während ihres Umlaufs werden Wertdokumente, wie Banknoten, starken Belastungen unterschiedlicher Art ausgesetzt, die ihre Umlaufdauer begrenzen. Die Umlaufdauer einer Banknote hängt wesentlich von ihrer Beanspruchung ab. Bestimmte Stückelungen werden im Handel bevorzugt benutzt und weisen damit aufgrund der stärkeren Belastung durch Umwelteinflüsse eine geringere Umlaufzeit auf. Eine Ursache für die Einschränkung der Umlaufdauer sind mechanische Beanspruchungen durch Abrieb, Falten oder Knittern. Als Hauptursache für die eingeschränkte Umlaufzeit von Banknoten gilt deren frühzeitige Verschmutzung. Da das für Banknoten bevorzugt verwendete Papier sehr porös ist, besitzt es eine große Oberfläche sowie eine hohe Oberflächenrauigkeit. Die Oberflächenrauigkeit begünstigt im Vergleich zu einer glatten Oberfläche Schmutzablagerungen im erheblichen Maße.

Schmutz kann flüssig oder fest sein, und flüssiger Schmutz wiederum kann ölig oder wässrig sein. Eine besondere Art von "Verschmutzung" stellt die Kontaminierung mit pathogenen Mikroorganismen, wie Bakterien, Viren, Pilzen, oder anderen pathogenen Mitteln dar. Das Problem derartiger mikrobieller Verschmutzungen ist umso ausgeprägter, je öfter ein Wertdokument durch die Hände unterschiedlicher Personen geht. Bei jeder Berührung werden einerseits Keime von dem Benutzer auf das Wertdokument übertragen und andererseits Keime von dem Wertdokument auf den jeweiligen Benutzer übertragen. Glücklicherweise führen derartige Übertragungen in aller Regel nicht zu einer Erkrankung oder sonstigen Schädigung der Wertdokument-Benutzer, aber in manchen Fällen kann ein Kontakt mit kontaminierten Wertdokumenten zu Infektionen führen, beispielsweise bei immungeschwächten Personen oder im Falle besonders infektiöser Mikroorganismen oder im Falle einer besonders starken Verunreinigung des Wertdokuments mit Mikroorganismen.

Leider stellen Papiere, und insbesondere solche mit hoher Oberflächenrauigkeit, gute Substrate für eine Anhaftung und Vermehrung von Mikroorganismen dar. Das Problem wird dadurch verschärft, dass manche Verschmutzungen geradezu Nährböden für Mikroorganismen darstellen. Es ist davon auszugehen, dass sichtbar zerknitterte und verschmutzte Banknoten oder sonstige Wertdokumente zudem Träger einer erheblichen unsichtbaren Verschmutzung durch meist harmlose, potentiell aber auch gefährliche Mikroorganismen sind.

Insofern besteht das Bedürfnis, Wertdokumente, und insbesondere die stark beanspruchten Banknoten, gegen Verschmutzungen und Kontaminierungen jeglicher Art zu schützen, um dadurch die Umlaufdauer zu erhöhen und eine Übertragung von Krankheiten oder eine sonstige pathogene Wirkung der Wertdokumente zu vermeiden.

Es wurden daher zahlreiche Versuche unternommen, die Umlaufdauer von Banknoten zu verlängern. Beispielsweise wurde vorgeschlagen, Banknoten vollständig aus einem Kunststoffsubstrat zu fertigen oder die Banknoten mit schützenden Beschichtungen auszustatten. Auch eine Ausstattung mit antimikrobiellen Mitteln ist grundsätzlich bekannt. Allerdings ist zu berücksichtigen, dass durch die schützende Ausstattung möglichst keine Veränderung der wertdokumenttypischen Eigenschaften (wie Klang und Griffigkeit), keine Beeinträchtigung der Sicherheitsmerkmale und keine schädlichen Umwelteinflüsse bewirkt werden dürfen. Dies ist bei schützenden Ausstattungen des Standes der Technik oft nur unzureichend der Fall. Beispielsweise wirken die verwendeten Biozide oft unspezifisch und/oder führen zu Resistenzentwicklungen, oder sind sogar für den Menschen toxisch.

Dokument EP 0 799 928 A2 offenbart ein faseriges Material mit einem antibakteriellen und fungiziden Mittel, das aus einem speziellen Metallsalz einer organischen Verbindung besteht, die sowohl antibakterielle als auch fungizide Eigenschaften aufweist.

Dokument GB 2480275 betrifft einen gedruckten Gegenstand mit einer oder mehreren Druckschichten auf mindestens einer Seite eines Substrats und mit einer kontinuierlichen Außenschicht, die auf beiden Seiten des Substrats angeordnet ist und die einen antibakteriellen Zusatzstoff umfasst.

WO 2004/072378 A1 betrifft ein Sicherheitspapier zur Herstellung von Wertdokumenten, wie Banknoten, Pässen, Ausweisdokumenten oder dergleichen, mit einem flächigen Substrat, das zumindest teilweise mit einer schmutzabweisenden Schutzschicht zur Verlängerung der Lebensdauer und der Umlauffähigkeit versehen ist.

US 2008/0305702 A1 offenbart ein Verfahren zur Beschichtung von Substraten, wobei das Verfahren die Aufbringung mehrerer Zusammensetzungen bzw. Schichten vorsieht und wobei zumindest eine Schicht eine antimikrobielle und/oder biozide Substanz enthält.

WO 2006/049478 A1 offenbart ein antimikrobielle Zusammensetzung zur Beschichtung von Faserprodukten. Die antimikrobielle Zusammensetzung enthält nanoskalige Partikel, umfassend eine Silber-Siliziumoxidverbindung, und ein wasserlösliches Polymer.

DE 10 2009 054 406 A1 betrifft ein Wertdokument mit einem flächigen Papiersubstrat, das an jeder seiner beiden Hauptflächen eine schmutzabweisende Beschichtung aufweist, wobei die Beschichtung eine Zusammensetzung aufweist, die mindestens ein Silikonharz und/oder Fluorsilikonharz und PTFE-Festpartikel enthält.

EP 2 314 459 A1 betrifft ein Wertdokument mit wenigstens einer fensterartigen, mittels eines Films zumindest teilweise verschlossenen Durchbrechung, die in dem zur Herstellung des Wertdokuments dienenden fertigen Papierträger nachträglich erzeugt wird und ein eingebettetes Sicherheitselement aufweist. Das Sicherheitselement weist im Bereich der Durchbrechung ein- oder beidseitig eine Dehäsivbeschichtung oder Dehäsivauflage auf.

US 2005/0031838 A1 offenbart ein Kennzeichnungssicherheitssystem zur Verhinderung der Fälschung von Waren, die ein Papierprodukt enthalten. Dazu weist das Kennzeichnungssicherheitssystem eine Beschichtung mit einem Markierungsstoff auf dem Papierprodukt auf.

Dokument US 5,660,919 betrifft ein bedruckbares Blatt, welches eine hohe Druckqualität und eine hohe Handhabungsfestigkeit aufweist. Mindestens eine der Seiten des Blattes ist mit einer Zusammensetzung behandelt, die mindestens einen Füllstoff und mindestens ein elastomeres Bindemittel enthält.

DE 20 2005 020 859 U1 offenbart ein antimikrobielles Verpackungsmaterial, das ein lagenartiges Geflecht aus Fasern aufweist, wobei das lagenartige Geflecht zur Reduzierung der Keimbelastung eines mit dem Verpackungsmaterial verpackten Produkts mit Silber beschichtet ist.

Aufgabe der vorliegenden Erfindung ist es daher, ein Sicherheitspapier und ein Wertdokument anzugeben, das die Nachteile des Standes der Technik vermeidet. Insbesondere soll das Sicherheitspapier bzw. das Wertdokument bevorzugt folgende Eigenschaften aufweisen:

Es soll über einen möglichst langen Zeitraum gegen feste und flüssige Verunreinigungen geschützt sein.

Es soll über einen möglichst langen Zeitraum gegen eine möglichst hohe Anzahl von Mikroorganismen antimikrobiell wirksam sein.

Es soll keine umweltschädlichen, insbesondere keine für den Menschen schädlichen Bestandteile aufweisen.

Es soll gewohnte wertdokumenttypische Eigenschaften, beispielsweise den typischen Griff und Klang einer Banknote, aufweisen.

Es soll die Ausstattung mit beliebigen Sicherheitsmerkmalen, beispielsweise taktilen Sicherheitsmerkmalen oder Wasserzeichen, zulassen.

Aufgabe der vorliegenden Erfindung ist es auch, ein Verfahren zur Herstellung eines derartigen Sicherheitspapiers und eines derartigen Wertdokuments bereitzustellen.

Die Aufgaben werden gelöst durch das Sicherheitspapier, das Wertdokument und die Verfahren zu ihrer Herstellung mit den Merkmalen, wie sie in den jeweiligen unabhängigen Ansprüchen angegeben sind. Spezielle Ausgestaltungen der Erfindung sind in den betreffenden abhängigen Ansprüchen angegeben.

Das erfindungsgemäße Sicherheitspapier weist ein flächiges Substrat auf, das zumindest teilweise mit einer schmutzabweisenden, antimikrobiellen Beschichtung versehen ist. Durch die schmutzabweisende und gleichzeitig antimikrobiell wirksame Beschichtung wird die Lebensdauer von Wertdokumenten, die mit dem erfindungsgemäßen Sicherheitspapier hergestellt sind, verlängert und die Gefahr einer Erkrankung von Personen durch eine Übertragung pathogener Mikroorganismen bei Kontakt mit derartigen Wertdokumenten verringert.

"Antimikrobiell" im Sinne der vorliegenden Erfindung bedeutet, dass eine Wirksamkeit gegen Mikroorganismen besteht, wobei die Wirkung idealerweise in einem Abtöten der Mikroorganismen besteht, aber auch in einer Hemmung von Wachstum und Vermehrung der Mikroorganismen bestehen kann.

"Mikroorganismen (Mikroben)" im Sinne der Erfindung sind insbesondere Bakterien, Pilze, wie Schimmelpilze und Hefepilze, sowie Viren, wobei im Fokus der vorliegenden Erfindung die potentiell pathogenen Mikroorganismen sind.

Mittel zur Bekämpfung der Mikroorganismen, d.h. "antimikrobielle Mittel", im Sinne der Erfindung umfassen daher insbesondere antibakterielle, antifungale und antivirale Mittel, wobei deren Wirkung sowohl biozid (beispielsweise bakterizid) als auch biostatisch (beispielsweise bakteriostatisch) sein kann. Es versteht sich, dass neben den derzeit bevorzugten und weiter unten beschriebenen antimikrobiellen Mitteln natürlich auch andere antimikrobielle Mittel eingesetzt werden können. Insbesondere sind also auch andere als die vorstehend beanspruchten antibakteriellen, antifungalen und antiviralen Mittel einsetzbar.

Das erfindungsgemäße Sicherheitspapier weist ein flächiges Substrat auf, das mit einer schmutzabweisenden Beschichtung ausgestattet ist, wobei die Beschichtung mindestens drei spezielle antimikrobielle Mittel, die voneinander verschieden sind, enthält. Vorteilhafterweise sind beide Oberflächen des flächigen Substrats mit einer derartigen Beschichtung versehen, wobei die Beschichtungen an den beiden Oberflächen gleich oder verschieden sein können. Vorteilhafterweise bedecken die Beschichtungen die Oberflächen auch jeweils vollflächig, wobei es natürlich grundsätzlich auch möglich ist, die Substrate an nur einer Oberfläche und/oder nur teilflächig zu beschichten.

Das Substrat des Sicherheitspapiers kann irgendein gängiges Sicherheitspapier-Substrat sein, insbesondere ein Papiersubstrat aus Baumwollfasern oder vorwiegend Baumwollfasern, und auch sogenanntes Baumwoll-Velinpapier. Es können jedoch generell Papiere aus Zellulosefasern und Papiere, die zumindest teilweise aus Kunststofffasern bestehen, beschichtet werden. Auch sogenannte Hybridsubstrate, d.h. mehrschichtige Substrate mit einer Innenschicht auf Papierbasis und zwei Außenschichten auf Kunststoffbasis oder einer Innenschicht auf Kunststoffbasis und zwei Außenschichten auf Papierbasis, können verwendet werden, wobei Substrate auf Papierbasis bevorzugt sind, da sie eine Ausstattung mit einer breiteren Vielfalt von Sicherheitsmerkmalen erlauben als Substrate auf Kunststoffbasis. Es ist unerheblich, ob das Substrat einlagig oder mehrlagig, geleimt oder ungeleimt, bedruckt oder unbedruckt, oder gegebenenfalls in irgendeiner Weise vorbeschichtet ist. Bei dem Substrat kann es sich ferner um ein ein- oder mehrschichtiges Polymersubstrat handeln, also um ein Sicherheitssubstrat, das aus einer oder mehreren gleichartigen oder verschiedenartigen Kunststoffschichten besteht.

Es versteht sich, dass das flächige Substrat zusätzlich zu der erfindungsgemäßen antimikrobakteriellen Beschichtung mit einem ersten antimikrobiellen Mittel und einem zweiten antimikrobakteriellen Mittel selbst Substanzen (im Substrat) aufweisen kann, die eine antimikrobielle Wirkung im Sinne der Erfindung aufweisen. Beispielsweise kann das Substrat sämtliche in der vorliegenden Anmeldung genannten antimikrobakteriellen Mittel aufweisen, insbesondere 1,2-Benzisothiazol-3(2H)-on (BIT) und ein Silber enthaltendes antimikrobielles Mittel. Die antimikrobiellen, insbesondere antibakteriellen, antifungalen oder antiviralen Mittel im Substrat können mit Vorteil während der Herstellung des Substrats, insbesondere bei der sogenannten "Leimung" eines Sicherheitspapiers, in das Substrat eingebracht werden. Denkbar ist es darüber hinaus auch, dass eines der beiden erfindungsgemäßen antimikrobiellen Mittel im Substrat und das zweite antimikrobielle Mittel in der schmutzabweisenden Beschichtung vorgesehen ist.

Die erfindungsgemäße, schmutzabweisende, antimikrobielle Beschichtung kann einschichtig oder mehrschichtig sein. Gemäß einer besonders bevorzugten Ausführungsform ist die schmutzabweisende, antimikrobielle Beschichtung zweischichtig ausgebildet, wobei es in erster Linie die obere Schicht, d.h. die Außenschicht ist, die das Substrat vor physikalischen und chemischen Einflüssen schützt, während die untere Schicht, d.h. die Schicht zwischen dem Substrat und der oberen Schicht, in erster Linie den Kontakt zu dem Substrat herstellt und, was insbesondere bei sehr porösen Substraten sehr wichtig ist, dessen Poren schließt.

Für die obere Beschichtungsschicht wird bevorzugt ein strahlungshärtender Lack, insbesondere ein UV-vernetzender Lack, verwendet. Strahlungshärtende Lacke und insbesondere UV-vernetzende Lacke zeichnen sich durch eine hohe physikalische und chemische Beständigkeit aus und sind sehr scheuerfest. Neben den guten lebensdauerverlängernden Eigenschaften bieten strahlungshärtende Lacke, und insbesondere UV-Lacke, auch eine Vielzahl von Möglichkeiten, die Haptik eines Sicherheitspapiers gezielt zu beeinflussen. Die Einstellung der Parameter Sprödigkeit, Glanz und Glätte der oberen Beschichtungsschicht erlaubt auf eine vielfältige Weise, direkten Einfluss auf die haptischen Eigenschaften des beschichteten Papiers, insbesondere auf dessen Glätte und Klang, zu nehmen.

Die vorteilhaften Eigenschaften strahlungshärtender Lacke können insbesondere auch für poröse Sicherheitspapiere genutzt werden, wenn die die Porösität verursachenden Vertiefungen, Unebenheiten und Poren solcher Substrate vor der Auftragung der strahlungshärtenden Lackschicht insbesondere durch eine untere Beschichtungsschicht, im Folgenden "Primerschicht" genannt, zumindest teilweise oder sogar vollständig geschlossen werden.

Die untere Beschichtungsschicht bzw. Primerschicht wird bevorzugt durch eine physikalisch trocknende Lackschicht gebildet. "Physikalisch trocknend" bedeutet, dass die Trocknung durch Verdunsten und/oder Wegschlagen der Lösungsmittel bzw. Dispersionsmittel in das Substrat erfolgt. Besonders bevorzugt sind Dispersionslacke auf Wasserbasis.

Beispiele für geeignete Primer-Zusammensetzungen sind Zusammensetzungen auf der Basis von Acrylaten, Polyesteracrylaten, Urethanacrylaten, Polyesterpolyurethanen und Acryl-Styrol-Polyurethanen. Wasserbasierte Dispersionen, insbesondere wasserbasierte Dispersionen aliphatischer Komponenten, sind besonders bevorzugt.

Alternativ können für die untere Beschichtungsschicht auch Hybridsysteme eingesetzt werden, d.h. Lacke, die sowohl physikalisch trocknende Bestandteile als auch strahlungshärtende Bestandteile enthalten. Bei der Trocknung eines Hybridlacks wird erst physikalisch, beispielsweise durch Wärme, das Lösungsmittel oder das Dispersionsmittel, beispielsweise Wasser, entfernt und dann mittels Strahlung einer geeigneten Wellenlänge der strahlungshärtende Lackanteil ausgehärtet. Als Hybridlack eignen sich beispielsweise wässrige Dispersionen auf der Basis aliphatischer Urethanacrylate und geeignete Monomere bzw. reaktive Oligomere, insbesondere Acrylate mit Photoinitiatoren.

Eine besonders bevorzugte Zusammensetzung für die untere Beschichtungsschicht ist eine wasserbasierte Zubereitung von synthetischen Kunstharzen, welche weiter unten im Text anhand einer Beispielrezeptur näher erläutert wird.

Die obere Beschichtungsschicht, d.h. die Deckschicht, wird bevorzugt aus Lacksystemen gebildet, die durch Bestrahlung mit ultraviolettem Licht (UV-Licht) vernetzen. Insbesondere kommen radikalisch vernetzende UV-Lacke oder kationisch vernetzende UV-Lacke infrage. Kationisch vernetzende Zusammensetzungen haben als Basis beispielsweise Epoxidharze, und radikalisch vernetzende Zusammensetzungen haben als Basis beispielsweise Acrylsäureester. Es versteht sich, dass jeweils geeignete Photoinitatoren enthalten sein müssen, und dass die Zusammensetzungen die üblichen Hilfsmittel enthalten können, die einem Fachmann bekannt sind.

Alternativ kann die Deckschicht auch von einem Hybridsystem gebildet werden, wobei grundsätzlich dieselben Hybridsysteme geeignet sind, die oben für die Primerschicht genannt wurden. Während für die Primerschicht der Anteil physikalisch trocknender Bestandteile überwiegen sollte, sollte in den Hybridsystemen für die Deckschicht der Anteil strahlungshärtender Bestandteile überwiegen. Besonders bevorzugt für die Herstellung der Deckschicht ist eine Präparation reaktiver Kunstharze, die im Wesentlichen verschiedene Acrylate enthält.

Bei einer bevorzugten Ausführungsform ist die obere Beschichtungsschicht direkt auf die untere Beschichtungsschicht aufgebracht. Alternativ kann zwischen den Beschichtungsschichten eine weitere Schicht, beispielsweise aus einem wasserbasierten Dispersionslack, vorgesehen sein. Ebenso können bereits vorbeschichtete Substrate verwendet werden, so dass sich die untere Beschichtungsschicht nicht unmittelbar auf dem Substrat, sondern auf einer Vorbeschichtung des Substrats befindet.

Es versteht sich, dass sämtliche Beschichtungszusammensetzungen, beispielsweise die Beschichtungszusammensetzungen für die obere und die untere Beschichtungsschicht, die üblichen Hilfsstoffe enthalten können. Übliche Hilfsstoffe sind beispielsweise Koaleszenzmittel, Verlaufmittel, Netzmittel, Entschäumungsmittel, Viskositäts-Modifizierungsmittel, Dispergier-Hilfsmittel und Verdünnungsmittel. Auch bevorzugt visuell nicht erkennbare Merkmalsstoffe, wie beispielsweise Lumineszenzstoffe, können in den Zusammensetzungen enthalten sein.

Gemäß einer anderen Ausführungsform der vorliegenden Erfindung kann die Primerschicht auch weggelassen werden, so dass die schmutzabweisenden und gegebenenfalls auch die antimikrobiellen Eigenschaften durch die Deckschicht gewährleistet werden. Diese Variante ist insbesondere geeignet für nicht oder nur wenig poröse Substrate, beispielsweise für vorbeschichtete Substrate, Kunststoffsubstrate (beispielsweise Polymerbanknoten) und Hybridsubstrate (beispielsweise Hybridbanknoten). Zur Beschichtung dieser Substrate sind grundsätzlich dieselben Zusammensetzungen geeignet, die oben für die Deckschicht genannt wurden, bevorzugt kationisch vernetzende UV-Lacke oder radikalisch vernetzende UV-Lacke und Hybridsysteme.

Auch bei Verwendung von nur einer Schutzschicht, d.h. bei Weglassung der Primerschicht, befindet sich die Schutzschicht in der Regel nicht unmittelbar auf dem Substrat. Vielmehr können dazwischen weitere Schichten vorhanden sein, beispielsweise Druckschichten und/oder Farbannahmeschichten.

Es versteht sich, dass die erfindungsgemäßen antimikrobiellen Mittel in den vorstehend genannten weiteren Schichten, also insbesondere weiteren Druckschichten und/oder Farbannahmeschichten enthalten sein können. Beispielsweise kann bei einem Hybridsubstrat mit innen liegender Papierschicht und außen liegenden Folienschichten oder auch bei dem bereits erwähnten Kunststoffsubstrat ein antimikrobielles Mittel in der auf den Folienschichten oder dem Kunststoffsubstrat angeordneten Farbannahmeschicht enthalten sein.

Das mit der schmutzabweisenden Beschichtung versehene Sicherheitspapier ist für eine Besiedelung durch Mikroorganismen, insbesondere für einen bakteriellen Befall, weniger anfällig als ein Sicherheitspapier auf Papierbasis ohne Beschichtung. Das liegt daran, dass die Beschichtung keine Feuchtigkeit aufnehmen und speichern kann, während sich die meisten Bakterien nicht für längere Zeit ohne Feuchtigkeit auf Substraten aufhalten und vermehren können. Die Anfälligkeit eines beschichteten Papiersubstrats für einen Befall durch Mikroorganismen ist in etwa vergleichbar mit der Anfälligkeit von Hybridsubstraten und Polymersubstraten, die auch kaum Feuchtigkeit aufnehmen und speichern können. Die antimikrobielle Wirkung des beschichteten Papiersubstrats kann aber noch verbessert werden.

Erfindungsgemäß wird daher die schmutzabweisende Beschichtung mit einer speziellen Kombination antimikrobieller Mittel ausgestattet, die der Beschichtung eine antimikrobielle Wirksamkeit verleiht. Die erfindungsgemäße Kombination antimikrobieller Mittel besteht mindestens aus einem ersten organischen antimikrobiellen Mittel und einem zweiten antimikrobiellen Mittel, das Silber enthält. Bevorzugt weist die erfindungsgemäße Kombination noch ein drittes antimikrobielles Mittel auf, das von dem zweiten antimikrobiellen Mittel verschieden ist, aber ebenfalls Silber enthält. Gewünschtenfalls können weitere antimikrobielle Mittel enthalten sein.

Das erste antimikrobielle Mittel ist 1,2-Benzisothiazol-3(2H)-on, im Folgenden BIT genannt.

Das zweite antimikrobielle Mittel enthält Silber in biologisch verfügbarer ionischer Form. Geeignet sind beispielsweise Salze, wie Silbernitrat oder Silberchlorid, und Substanzen, die Silber in ionenaustauschbarer Form enthalten, wie Silber in Zeolith/ Glas oder silberbeladene Mineralien, oder sonstige Materialien, wie Silberchlorid auf Titandioxid. Es ist vorteilhaft, wenn die mit Silber beladenen Materialien in sehr fein zerkleinerter Form vorliegen, insbesondere als Nanomaterialien mit mittleren Teilchengrößen von maximal 500 nm. Es ist bekannt, dass bestimmte Nanomaterialien an sich bereits eine gewisse antimikrobielle Aktivität aufweisen, und darüber hinaus sind sehr kleine Partikel problemloser in die Beschichtungszusammensetzungen integrierbar. Die wesentlichste Anforderung an das zweite antimikrobielle Mittel jedoch ist, dass es das Silber in biologisch gut verfügbarer Form enthält.

Für das dritte antimikrobielle Mittel gilt dasselbe wie für das zweite antimikrobielle Mittel, wobei das zweite und das dritte antimikrobielle Mittel voneinander verschieden sind, beispielsweise Silbernitrat als zweites antimikrobielles Mittel und Silberchlorid als drittes antimikrobielles Mittel.

BIT und Silber wirken hinsichtlich ihrer antimikrobiellen Aktivität ideal zusammen. Beide antimikrobiellen Mittel besitzen ein breites Wirkungsspektrum über einen ausgedehnten Zeitraum, wobei sie besonders wirksam gegen grampositive und gram-negative Bakterien, gegen Schimmelpilze und Hefepilze sind. In den erforderlichen Konzentrationen haben sie keine ungünstigen Auswirkungen auf ihre Umgebung, d.h. sie sind toxikologisch unbedenklich, nicht reizend, und führen nicht zu allergischen Reaktionen. Auch Entwicklungen von Resistenzen wurden nicht beobachtet.

Überraschenderweise wurde gefunden, dass BIT mit Silberionen synergistisch zusammenwirkt. Daher sind für die Erzielung einer guten antimikrobiellen Wirksamkeit nur sehr geringe Mengen an BIT und an Silberionen erforderlich. Eine besonders gute Wirksamkeit wird erzielt, wenn zwei oder mehr verschiedene Silber enthaltende antimikrobielle Substanzen eingesetzt werden.

Die Kombination von BIT mit einem Silber enthaltenden, antimikrobiellen Mittel ist hervorragend mit den verwendeten Beschichtungssystem verträglich, und durch die Zumischung der antimikrobiellen Mittel tritt keine negative Beeinflussung von wertdokumenttypischen Eigenschaften, wie Glanz, Griffigkeit und Klang beim Knittern, auf. Dies ist insbesondere bei Silber enthaltenden antimikrobiellen Mitteln überraschend, da diese eigentlich dazu neigen, im Laufe der Zeit zu Verfärbungen zu führen.

Zu erwähnen ist noch, dass das erste antimikrobielle Mittel aus der Stoffklasse der Isothiazolinone stammt und aufgrund seines synergistischen Zusammenwirkens mit dem zweiten Silber enthaltenden, antimikrobiellen Mittel für die antimikrobielle Beschichtung des erfindungsgemäßen Sicherheitssubstrats ausgewählt wurde. Generell ist es auch möglich, andere Isothiazolinone als erstes antimikrobielles Mittel und ein Silber enthaltendes, zweites antimikrobielles Mittel vorzusehen, wobei allerdings in einem solchen Fall in der Regel eine geringere antimikrobielle Wirkung der eingesetzten Beschichtung gegenüber der erfindungsgemäßen Zusammensetzung in Kauf genommen werden muss. Des Weiteren kann auch z.B. 2-Methyl-2H-isothiazol-3-on (MIT) als erstes antimikrobielles Mittel eingesetzt werden, wobei die Vorsehung von MIT mit 3-Iod-2-propinylbutylcarbamat als zweites antimikrobielles Mittel unter dem Produktnamen ACTICIDE®IM (von Thor GmbH (Speyer)) bekannt ist.

Alternativ kann auch 2-Octyl-2-H-isothiazol-3-on (OI) als erstes antimikrobielles Mittel eingesetzt werden, wobei bei Vorsehung von OI mit Zinkpyrithon und 3-Iod-2-propinylbutylcarbamat als weitere antimikrobielle Mittel, das unter dem Produktnamen ACTICIDE®MKE (von Thor GmbH (Speyer)) bekannte Fungizid/ Algizid erhalten wird. Wie auch im Fall des vorstehend genannten ACTICIDE®IM ist bei ACTICIDE®MKE die antimikrobielle Wirksamkeit in der Regel geringer als bei der erfindungsgemäßen Kombination von BIT und einem zweiten Silber enthaltenden, antimikrobiellen Mittel. Das erste und das zweite antimikrobielle Mittel, und gegebenenfalls das dritte antimikrobielle Mittel können sich in der gleichen oder in verschiedenen Schichten der Beschichtung befinden. Das synergistische Zusammenwirken tritt unabhängig davon auf, ob sich die antimikrobiellen Mittel in der gleichen oder in verschiedenen Schichten befinden. Allerdings sollten sie sich in einander benachbarten Schichten befinden oder zumindest nicht durch eine durchgehende Schicht ohne antimikrobielles Mittel voneinander getrennt werden. Die antimikrobiellen Mittel können sich beispielsweis in der Primerschicht und/oder der Deckschicht der schmutzabweisenden Beschichtung befinden, oder alternativ oder zusätzlich auch in einer anderen Schicht, beispielsweise einer Farbannahmeschicht und/oder irgendeiner Zwischenschicht. Dabei kann es sich bei einer solchen, ein antimikrobielles Mittel enthaltenden Zwischenschicht auch um eine Primerschicht handeln.

Gemäß einer Ausführungsform befinden sich BIT und ein Silber enthaltendes antimikrobielles Mittel in derselben Schicht. Gemäß der Erfindung ist ein weiteres Silber enthaltendes antimikrobielles Mittel vorhanden, das sich in der gleichen Schicht oder in einer Nachbarschicht befinden kann. Gemäß einer besonders bevorzugten Ausführungsform sind BIT und ein Silber enthaltendes, antimikrobielles Mittel in einer unteren Schicht, beispielsweise der Primerschicht der antimikrobiellen Beschichtung, enthalten, während ein weiteres Silber enthaltendes, antimikrobielles Mittel in einer die untere Schicht abdeckenden Schicht, beispielsweise der Deckschicht der antimikrobiellen Beschichtung, enthalten ist.

Diese besonders bevorzugte Verteilung der antimikrobiellen Mittel auf zwei Schichten hat mehrere Gründe. Zum einen ist BIT nicht unbegrenzt UVbeständig, so dass die Gefahr besteht, dass seine antimikrobielle Wirkung im Laufe der Zeit verloren geht, wenn es in der Deckschicht ungeschützt UV-Strahlung ausgesetzt wird. Wenn BIT in einer unteren Schicht durch eine Deckschicht geschützt wird, besteht diese Gefahr nicht. In Bezug auf BIT ist noch zu erwähnen, dass diese Substanz insbesondere in einem nicht gehärteten UV-Lack unbeständig ist. Es bietet sich daher an, BIT entweder in einer wässrigen zweiten Schicht, insbesondere Primerschicht, vorzusehen oder aber BIT unmittelbar vor der Aufbringung der zur Beschichtung vorgesehenen UV-härtenden Zusammensetzung in diese Zusammensetzung einzubringen und möglichst umgehend die Beschichtung des vorgesehenen Substrats vorzunehmen.

Zum anderen werden viele Wertdokumente, insbesondere Banknoten, im Umlauf chemisch (beispielsweise durch Schweiß oder Seife) und physikalisch (beispielsweise durch Temperaturwechsel oder durch mechanischen Abrieb) sehr stark beansprucht. Dies führt dazu, dass die Beschichtung im Umlauf beschädigt wird oder an manchen Stellen sogar abgetragen wird. Um die Funktionalität des antimikrobiellen Schutzes über die gesamte Umlaufzeit möglichst so gut zu erhalten, ist es daher vorteilhaft, wenn sich die antimikrobiellen Mittel in getrennten Lackschichten befinden, insbesondere in Schichten, die unterschiedliche physikalische und/oder chemische Eigenschaften aufweisen, so dass davon auszugehen ist, dass sie während der Umlaufzeit nicht in identischer Weise beschädigt werden. Beispielsweise ist die Primerschicht sehr elastisch, während die Deckschicht typischerweise weniger elastisch ist und beim Knicken eines Wertdokuments eher zu Brüchen neigt als die Primerschicht. Stellen mit Brüchen und Rissen sind oft Ausgangsstellen für weitere mechanische Beschädigungen. Wenn nun die Deckschicht an bestimmten Stellen durch mechanische Schäden nicht mehr antimikrobiell wirken kann, kann die Primerschicht diesen Mangel ausgleichen. Die Vorsehung des erfindungsgemäßen ersten und zweiten antimikrobiellen Mittels in zwei oder sogar mehr Schichten der erfindungsgemäßen Beschichtung ist demnach besonders vorteilhaft, wenn die Beschichtung im Umlauf beschädigt oder an manchen Stellen sogar abgetragen wird. In einem solchen Fall kann das zweite antimikrobielle Mittel der nicht beschädigten bzw. nicht abgetragenen Schicht stets eine gewisse antimikrobielle Wirkung aufrechterhalten. Die erfindungsgemäße Beschichtung gestattet es also vorteilhafterweise, über einen möglichst langen Zeitraum gegen eine möglichst hohe Anzahl von Mikroorganismen antimikrobiell wirksam zu sein. Darüber hinaus weist die erfindungsgemäße Beschichtung keine umweltschädlichen, insbesondere keine für den Menschen schädliche Bestandteile auf. Des Weiteren kann die Beschichtung ein damit ausgestattetes Sicherheitspapier über einen möglichst langen Zeitraum gegen feste und flüssige Verunreinigungen schützen, wobei das Sicherheitspapier ferner wertdokumenttypische Eigenschaften, beispielsweise die typische Griffigkeit und Klang eines Wertdokuments, insbesondere einer Banknote, aufweist.

Wird die Kombination von BIT und einem zweiten Silber enthaltenden, antimikrobiellen Mittel ohne ein drittes antimikrobielle Mittel eingesetzt, ist es ganz besonders bevorzugt, dass zumindest BIT in einer wasserbasierten Schicht, insbesondere einer Primer- oder Farbannahmeschicht enthalten ist. Der Hintergrund dieser Bevorzugung ist die besonders große Beständigkeit von BIT in wasserbasierten Zusammensetzungen.

Die antimikrobiellen Mittel sind bereits in geringen Mengen wirksam. Das erste antimikrobielle Mittel, BIT, wird bevorzugt in einer Menge von 0,05 Gew.-% bis 0,20 Gew.-%, besonders bevorzugt in einer Menge von 0,10 Gew.-% bis 0,15 Gew.-%, der die jeweilige Schicht bildenden Zusammensetzung (Nass) eingesetzt, und das zweite und das dritte antimikrobielle Mittel, die Silber enthaltenden, antimikrobiellen Mittel, werden jeweils in einer Menge von bevorzugt 0,01 Gew.-% bis 0,10 Gew.-%, besonders bevorzugt in einer Menge von 0,03 Gew.-% bis 0,07 Gew.-%, Silberionen in der die jeweilige Schicht bildenden Zusammensetzung (Nass) eingesetzt. Die Mengen sind unabhängig davon, ob es sich bei der jeweiligen Schicht um eine Primerschicht, eine Deckschicht oder um irgendeine sonstige Schicht, beispielsweise eine Farbannahmeschicht, handelt.

Die schmutzabweisende, antimikrobielle Beschichtung ist bevorzugt transparent und farblos, insbesondere wenn ein bedrucktes Substrat möglichst gut sichtbar bleiben soll. Natürlich kann auch die Primerschicht und/oder die Deckschicht mit einer Farbtönung, mit einer Mattierung oder mit sonstigen Funktionen ausgestattet werden.

Es ist vorteilhaft, wenn die untere Beschichtungsschicht (beispielsweise die Primerschicht) in einem Beschichtungsgewicht von 1 $g/m^2$ bis 6 $g/m^2$, bevorzugt von 1,5 $g/m^2$ bis 4 $g/m^2$, auf dem Substrat vorliegt. Dies entspricht für den bevorzugten Bereich einer Menge von etwa 3,75 $g/m^2$ bis 10 $g/m^2$ in ungetrocknetem, nassem Zustand (beispielsweise bei wässrigem Dispersionslack mit 40 % Festkörperanteil). Jedenfalls muss die Schichtdicke ausreichend sein, um im Falle poröser Substrate die unregelmäßigen Vertiefungen und Poren zumindest im Wesentlichen zu schließen. Für die obere Beschichtungsschicht (die Deckschicht oder auch die einzige Schicht) genügt es, wenn sie mit einem geringeren Beschichtungsgewicht von 0,5 $g/m^2$ bis 3 $g/m^2$, bevorzugt von 1 $g/m^2$ bis 2,5 $g/m^2$, auf dem Substrat vorliegt. Dies entspricht für den bevorzugten Bereich im unvernetzten Zustand einer Menge von etwa 1 $g/m^2$ bis 2,5 $g/m^2$, da UV-Systeme sogenannte "100 %-Systeme" sind, d.h. 100 % Festkörperanteil haben.

Das Substrat kann von der Auftragung der antimikrobiellen, schmutzabweisenden Beschichtung bereits mit Zeichen oder Mustern bedruckt sein, oder es kann auch alternativ zuerst eine antimikrobielle Primerschicht auf das Substrat aufgetragen werden, dann bedruckt werden, und dann eine antimikrobielle Deckschicht aufgetragen werden. Anstelle der Primerschicht kann auch eine antimikrobielle Farbannahmeschicht oder eine sonstige Ausstattungsschicht auf dem Substrat vorgesehen werden, die dann bedruckt werden kann und nur mit einer antimikrobiellen Deckschicht oder mit einer antimikrobiellen Primerschicht und einer antimikrobiellen Deckschicht beschichtet wird.

Wenn alle antimikrobiellen Mittel in einer einzigen Schicht enthalten sind, sollte diese Schicht vollflächig ausgebildet werden, d.h. die gesamte Oberfläche des Sicherheitspapiers bedecken, um die schmutzabweisenden und antimikrobiellen Eigenschaften auf der gesamten Oberfläche des Sicherheitspapiers zu gewährleisten. Wenn sich die antimikrobiellen Mittel in verschiedenen Schichten befinden, kann es ausreichend sein, die Schichten nur teilflächig auszubilden, wobei jedoch die Schichten insgesamt eine vollflächige Beschichtung bilden sollten.

Zur Herstellung eines erfindungsgemäßen Sicherheitspapiers wird ein vollflächiges Substrat bereitgestellt und darauf eine schmutzabweisende, antimikrobielle Beschichtung aufgebracht, indem zunächst in einem ersten Schritt als untere Beschichtungsschicht eine physikalisch trocknende Schicht auf das Substrat aufgebracht wird, um einen Kontakt zu dem darunterliegenden Substrat herzustellen und dessen Poren zu schließen, und dann in einem zweiten Schritt als obere Beschichtungsschicht eine strahlungshärtende Lackschicht aufgebracht wird, die das Substrat vor physikalischen und chemischen Einflüssen schützt. Bei im Wesentlichen porenfreien Substraten kann die physikalisch trocknende Lackschicht auch weggelassen werden. Die Beschichtung, d.h. die physikalisch trocknende Schicht und/oder die strahlungshärtende Schicht, enthält mindestens zwei oder bevorzugt mindestens drei antimikrobielle Mittel, nämlich BIT und mindestens ein Silber enthaltendes, antimikrobielles Mittel.

Bei Auftragung von zwei Schichten kann die Aufbringung der beiden Schichten mit Vorteil in einem Prozessschritt mit Zwischentrocknung (der zuerst aufgebrachten Schicht) erfolgen. Zur Unterstützung der physikalischen Trocknung wird bevorzugt ein Heißluftgebläse und/oder ein Infrarotstrahler vorgesehen. Soll die untere Schicht bedruckt werden, muss sie vor dem Bedrucken getrocknet werden. Die Auftragung kann durch übliche Druckverfahren erfolgen, beispielsweise durch Flexodruck.

Das Sicherheitspapier-Substrat wird bevorzugt in Form von Bogen oder Bahnen bereitgestellt, die mit der erfindungsgemäßen schmutzabweisenden, antimikrobiellen Beschichtung beschichtet werden, und gegebenenfalls mit zusätzlichen Schichten und/oder Aufdrucken und/oder Sicherheitselementen ausgestattet werden. Von diesen Bogen oder Bahnen werden dann Einzelnutzen in Form von fertigen Wertdokumenten oder in Form von noch nicht umlauffähigen Sicherheitspapier-Einzelnutzen, die noch zu Wertdokumenten vervollständigt werden müssen, abgetrennt.

Die Erfindung wird nachfolgend anhand von Figuren noch weiter veranschaulicht. Es wird darauf hingewiesen, dass die Figuren lediglich schematische Darstellungen sind und die dargestellten Abmessungen und Proportionen nicht der Realität entsprechen. Die Erfindung ist selbstverständlich nicht auf die gezeigten Ausführungsformen und Merkmalskombinationen beschränkt. Gleiche Bezugsziffern bezeichnen jeweils gleiche oder entsprechende Elemente.

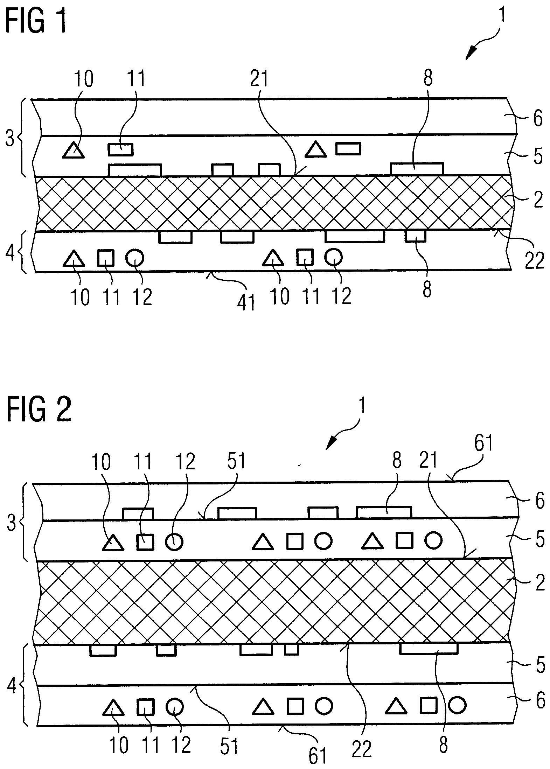

Die Figuren 1 bis 4 zeigen jeweils Schnitte durch alternative Ausführungsformen erfindungsgemäßer Sicherheitspapiere.

Die Ausführungsform des Sicherheitspapieres 1 gemäß Fig. 1 weist ein Substrat 2 auf, das beispielsweise aus Papier, bevorzugt Baumwollpapier, bestehen kann. Alternative Substrate sind Polymersubstrate, Hybridsubstrate und beliebig beschichtete Papiere, insbesondere Papiere, die z.B. mit einer eine Schutzfunktion ausübenden Schutzschicht beschichtet sind. Dadurch, dass die Erfindung auch auf sämtliche vorstehend genannten alternativen Substrate anwendbar ist, können praktisch beliebige Substrate mit der erfindungsgemäßen antimikrobiellen Beschichtung versehen werden. Das Substrat 2 hat eine erste Substratoberfläche 21 und eine zweite Substratoberfläche 22, die in der dargestellten Ausführungsform beide mit einem Druckbild 8 bedruckt sind. Auf der bedruckten ersten Substratoberfläche 21 befindet sich eine Beschichtung 3 und auf der bedruckten zweiten Substratoberfläche 22 befindet sich eine Beschichtung 4. In der dargestellten Ausführungsform sind die Beschichtungen 3 und 4 voneinander verschieden.

Die Beschichtung 3 besteht aus einer unteren Beschichtungsschicht 5, beispielsweise aus einer physikalisch trocknenden Beschichtungszusammensetzung. Die untere Beschichtungsschicht 5 enthält ein erstes antimikrobielles Mittel 10 (dargestellt durch Dreiecke) und ein zweites antimikrobielles Mittel 11 (dargestellt durch Quadrate). Das erste antimikrobielle Mittel ist 1,2-Benzisothiazol-3(2H)-on (BIT), und das zweite antimikrobielle Mittel 11 ist eine Silber enthaltende Substanz, beispielsweise Silbernitrat. Es versteht sich, dass die antimikrobiellen Substanzen in den Beschichtungsschichten im Wesentlichen statistisch verteilt sind, und nicht die in den Figuren dargestellten regelmäßigen Anordnungen aufweisen. Auf der unteren Beschichtungsschicht 5 befindet sich eine obere Beschichtungsschicht 6, die in der dargestellten Ausführungsform keine antimikrobiellen Mittel enthält. Die obere Beschichtungsschicht 6 besteht beispielsweise aus einem UV-härtbaren Lack.

Die Beschichtung 4 an der zweiten Substratoberfläche 22 ist einschichtig. Sie besteht beispielsweise aus einem UV-härtbaren Lack. Derartige einschichtige Beschichtungen sind insbesondere für nicht poröse Substrate, wie Polymersubstrate, Hybridsubstrate und vorbeschichtete Substrate, geeignet. Die Beschichtung 4 enthält drei verschiedene antimikrobielle Mittel, nämlich BIT als erstes antimikrobielles Mittel 10 (dargestellt als Dreiecke), eine Silber enthaltende Substanz, beispielsweise Silbernitrat, als zweites antimikrobielles Mittel 11 (dargestellt als Quadrate), und eine weitere Silber enthaltende Substanz, beispielsweise Silberchlorid, als drittes antimikrobielles Mittel 12 (dargestellt als Kreise). Die Beschichtungsoberfläche 41 kann gewünschtenfalls bedruckt werden oder mit Sicherheitselementen ausgestattet werden.

Das in Fig. 1 dargestellte Sicherheitspapier 1 ist "unsymmetrisch" beschichtet, d.h. die Beschichtungen an der ersten Substratoberfläche 21 und an der zweiten Substratoberfläche 22 unterscheiden sich voneinander. Beschichtungen können sich beispielsweise hinsichtlich der Anzahl ihrer Schichten und/oder hinsichtlich der Zusammensetzung ihrer Schichten, insbesondere auch hinsichtlich der enthaltenen antimikrobiellen Mittel, unterscheiden. Es versteht sich, dass die erfindungsgemäßen Sicherheitspapiere sowohl "unsymmetrisch" als auch "symmetrisch" beschichtet sein können. Eine Beschichtung ist "symmetrisch", wenn Anzahl und Zusammensetzung der Schichten an der ersten Substratoberfläche 21 und an der zweiten Substratoberfläche 22 identisch sind. Identität der Druckbilder und/oder eventuell vorhandener Sicherheitselemente ist nicht erforderlich.

Alternativ zu der in Fig. 1 dargestellten Ausführungsform könnten sich das erste antimikrobielle Mittel 10 und das zweite antimikrobielle Mittel 11 beispielsweise auch in der oberen Beschichtungsschicht 6 befinden, oder es könnte sich nur das erste antimikrobielle Mittel 10 in der unteren Beschichtungsschicht 5, und das zweite antimikrobielle Mittel 11 in der oberen Beschichtungsschicht 6 befinden, oder es könnte sich zusätzlich zu dem ersten antimikrobiellen Mittel 10 und dem zweiten antimikrobiellen Mittel 11 in der unteren Beschichtungsschicht 5 noch zweites antimikrobielles Mittel 11 in der oberen Beschichtungsschicht 6 befinden. Weitere Varianten sind möglich, wobei es jedoch bevorzugt ist, das erste antimikrobielle Mittel 10 in einer Schicht unterzubringen, die durch eine zusätzliche Beschichtungsschicht vor UV-Strahlung geschützt ist.

Die Ausführungsform des Sicherheitspapiers gemäß Fig. 2 weist ein Substrat 2 mit einer unbedruckten ersten Substratoberfläche 21 und einer bedruckten (Druckzeichen 8) zweiten Substratoberfläche 22 auf. Auf den Substratoberflächen 21 und 22 befinden sich jeweils Kombinationsbeschichtungen 3 und 4, d.h. Beschichtungen, die aus einer unteren Beschichtungsschicht 5 und einer oberen Beschichtungsschicht 6 bestehen. Die untere Beschichtungsschicht 5, beispielsweise aus einer physikalisch trocknenden Primerzusammensetzung, befindet sich jeweils auf den Substratoberflächen 21, 22, und die obere Beschichtungsschicht 6, beispielsweise aus einer UV-vernetzbaren Lackzusammensetzung, befindet sich jeweils auf der Außenoberfläche 51 der unteren Beschichtungsschicht 5. Die Oberfläche 51 der unteren Beschichtungsschicht 5 der Beschichtung 3 ist außerdem bedruckt (Druckzeichen 8). Beide Beschichtungen 3, 4 enthalten jeweils drei verschiedene antimikrobielle Mittel, ein erstes antimikrobielles Mittel 10 (BIT), ein zweites antimikrobielles Mittel 11 und ein drittes antimikrobielles Mittel 12, die beide Silber enthalten. Das antimikrobielle Mittel 11 ist beispielsweise Silbernitrat, und das antimikrobielle Mittel 12 ist beispielsweise Silber in Zeolith/Glas. In der Beschichtung 3 befinden sich die antimikrobiellen Mittel 10, 11, 12 in der unteren Beschichtungsschicht 5, während sie sich in der Beschichtung 4 in der oberen Beschichtungsschicht 6 befinden. Bei starker mechanischer Beanspruchung des Sicherheitspapiers 1 kann unter Umständen die Oberfläche 61 der oberen Beschichtungsschicht 6 beschädigt werden, was bei der Beschichtung 4 zu einem Verlust an antimikrobiellen Mitteln führen kann, während die antimikrobiellen Mittel in der Beschichtung 3 auch bei einer Beschädigung der oberen Beschichtungsschicht 6 erhalten bleiben.

In der Ausführungsform der Fig. 2 kann die Beschichtung des Substrats mit der unteren Beschichtungsschicht 5 der Beschichtung 3 bereits beim Substrathersteller erfolgen, da die Substratoberfläche 21 unbedruckt ist. Die zu bedruckende untere Beschichtungsschicht 5 könnte alternativ zu einer physikalisch trocknenden Primerschicht beispielsweise auch eine Farbannahmeschicht sein.

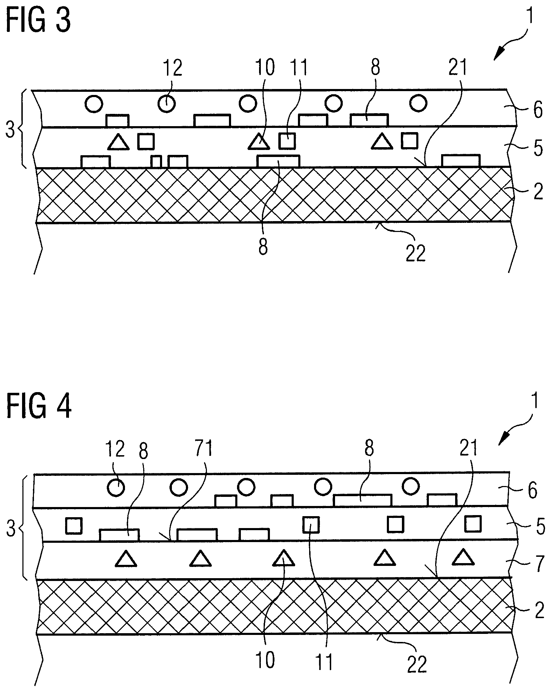

In den Darstellungen der Figuren 3 und 4 ist jeweils nur eine Beschichtung 3 auf der Substratoberfläche 21 des Substrats 2 gezeigt. Es versteht sich, dass es sinnvoll ist, auch die Substratoberfläche 22 mit einer schmutzabweisenden, antimikrobiellen Beschichtung auszustatten.

Die Beschichtung 3 auf der Substratoberfläche 21 des Substrats 2 des in Fig. 3 dargestellten Sicherheitspapiers 1 ist wiederum eine Kombinationsbeschichtung aus einer unteren Beschichtungsschicht 5 und einer oberen Beschichtungsschicht 6. In der dargestellten Ausführungsform enthält die untere Beschichtungsschicht 5 BIT als erstes antimikrobielles Mittel 10 und eine Silber enthaltende Substanz, beispielsweise Silbernitrat, als zweites antimikrobielles Mittel 11. Eine weitere Silber enthaltende Substanz, beispielsweise Silberchlorid auf Titandioxid, ist als drittes antimikrobielles Mittel 12 in der oberen Beschichtungsschicht 6 enthalten. Alternativ könnten (in dieser wie in allen anderen Ausführungsformen) die Schichten auch ganz oder teilweise dieselben antimikrobiellen Mittel enthalten.

Die Beschichtung 3 auf der Oberfläche 21 des Substrats 2 der in Fig. 4 dargestellten Ausführungsform des Sicherheitspapiers 1 besteht aus drei Schichten, beispielsweise einer Farbannahmeschicht 7 an der Substratoberfläche 21, die einen Aufdruck 8 aufweist, einer unteren Beschichtungsschicht 5 aus einer physikalisch trocknenden Zusammensetzung auf der Oberfläche 71 der Schicht 7, und einer oberen Beschichtungsschicht 6 aus einem UV-härtenden Lack auf der mit Druckzeichen 8 bedruckten Oberfläche der unteren Beschichtungsschicht 5. Jede der Schichten 5, 6, 7 enthält jeweils ein antimikrobielles Mittel. Die unterste, am besten vor UV-Strahlung geschützte Schicht 7 enthält das erste antimikrobielle Mittel 10 (BIT), die Schicht 5 enthält das zweite antimikrobielle Mittel 11, und die oberste Schicht 6 enthält das dritte antimikrobielle Mittel 12. Die antimikrobiellen Mittel 11, 12 sind Substanzen auf der Basis von Silber, wie Silbersalze, Silberionen in Ionenaustauschern oder silberbeladene Metalloxide oder Mineralien. Das zweite und das dritte antimikrobielle Mittel sind voneinander verschieden. Die Schicht 7 mit dem ersten antimikrobiellen Mittel 10 kann bereits beim Substrathersteller auf das Substrat 2 aufgebracht werden.

Bei allen Ausführungsformen wirken das erste, das zweite und das dritte antimikrobielle Mittel in vorteilhafter Weise zusammen und ergänzen und verstärken sich in ihrer Wirkung, auch wenn sie in unterschiedlichen Teilschichten der Beschichtung enthalten sind.

An dieser Stelle sei angemerkt, dass neben den in der vorliegenden Anmeldung beschriebenen erfindungsgemäßen ein- oder mehrschichtigen Beschichtungen selbstverständlich auch weitere Schichten auf dem Substrat vorgesehen sein können. Z.B. können zwischen der in Fig. 1 bis Fig. 4 gezeigten Beschichtung 3 und dem Substrat 2 weitere Schichten vorhanden sein, die aber der Übersichtlichkeit wegen nicht weiter dargestellt sind. Sofern die erfindungsgemäße Beschichtung mehrschichtig ist, wie z.B. die Beschichtung 3 und 4 in Fig. 2 bzw. die Beschichtung 3 in Fig. 3 und Fig. 4, können selbstverständlich weitere, ebenfalls nicht dargestellte Schichten zwischen den erfindungsgemäßen Schichten 5 und 6 (Fig. 2 und Fig. 3) bzw. zwischen den Schichten 5, 6 und 7 (siehe Fig. 4) vorgesehen sein.

Sieben Sicherheitspapier-Muster wurden in Anlehnung an die Messmethode AATCC 100, und weitere vier Sicherheitspapier-Muster wurden nach der Prüfmethode JIS Z 2801 auf ihre antibakterielle Wirksamkeit geprüft. Der Aufbau der Sicherheitspapier-Muster (Substrat, Zusammensetzung der Beschichtung, Art und Konzentration der antimikrobiellen Mittel) ist in Tabelle 1 angegeben. Wie aus Tabelle 1 ersichtlich ist, enthalten die meisten Muster (Probe-Nr. 4 bis 8b) drei verschiedene antimikrobielle Substanzen, nämlich BIT und zwei Silber enthaltende, antimikrobielle Substanzen (Ag). Die Proben 3a und 3b enthalten jeweils BIT und eine Silber enthaltende, antimikrobielle Substanz, während die Vergleichsprobe Nr. 1 nur eine einzige antimikrobielle Substanz enthält. Vergleichsprobe Nr. 2 enthält antimikrobielle Substanzen im Substrat, nicht aber in einer Beschichtung auf dem Substrat (Decklack).

Zu den Messmethoden:

Die Proben 1, 2, 3a, 4, 5, 6a, 7, und 8a wurden in Anlehnung an die Methode AATCC 100 auf ihre antimikrobielle Wirkung geprüft.

Nach Applikation von 0,2 ml Keimsuspension (Verdünnung in 0,9 % NaCl-Lösung) pro Prüfling wurden diese einzeln in einer sterilen Petrischale bei 36 °C aufbewahrt. Für jeden Kontaktzeitpunkt wurde ein Prüfling vorbereitet. Bei Kontaktende wurden die Keime in 10 ml BD D/E Neutralisationslösung von den Prüflingen abgelöst und mittels Plattenguss die Keimzahl bestimmt.

Die Proben wurden im Vorfeld nicht sterilisiert. Die Untersuchung erfolgte als Doppelbestimmung.

| | | |
|---|---|---|
| Testkeime: | Staphylococcus aureus | (DSM 799) |
| | Escherichia coli | (DSM 1576) |
| Kontaktzeitpunkt: | 0 h, 24 h. | |
| Kontakttemperatur: | 36 °C | |
| Nährmedium: | CASO-Agar (Bakterien) Sabouraud-4%Glucose-Chloramphenicol-Agar (Schimmelpilz) | |
| Bebrütung: | 2 Tage | |
| Prüflingsgröße: | 3 x 3 cm | |

Die Abnahme der Keimzahl (antimikrobielle Reduktion) wurde wie folgt berechnet:

$$\text{bezogen auf die Ausgangskeimzahl:} \quad \% \text{ Abnahme} = \frac{(T_0 - T_x)}{T_0} \times 100$$

$T_0 =$ Keimzahl/Prüfling, unmittelbar nach dem Beimpfen
$T_X =$ Keimzahl/Prüfling, nach 24 h Lagerung

Die Proben 3b, 6b, 7 und 8b wurden nach der Prüfmethode JIS Z2801 auf ihre antimikrobielle Wirkung geprüft:

Die gereinigten und getrockneten Muster wurden in sterile Petrischalen gelegt, mit einer definierten Menge Bakterieninoculum beimpft und mit ebenfalls gereinigtem Parafilm abgedeckt. Anschließend wurden die Muster bei 30 °C 24 h lang inkubiert, mit geeignetem Neutralisationsmittel eine eventuelle Reaktion gestoppt und schließlich auf Nutrient-Agar ausplattiert. Nach erneuter Inkubation von 24 h bei 30 °C wurden die koloniebildenden Einheiten (KBE) ausgezählt.

Die antimikrobielle Reduktion wurde bestimmt wie vorstehend angegeben. Testkeime waren Escherichia coli, Staphylococcus aureus, Aspergillus niger und Pseudomonas aeruginosa.

Die Ergebnisse sind in Tabelle 2 angegeben.

Tabelle 1

| Probe Nr. | Schichtfolge der Muster |
|---|---|
| 1 | BP-Substrat/Primer/Decklack + 0,75% AGT 2 (Ag) |
| 2 | BP-Substrat+antimikrobielle Substanz/Decklack |
| 3a | BP-Substrat/Primer + 0,75% SBA (BIT+Ag)/Decklack |
| 3b | BP-Substrat/Primer + 0,5% SBA (BIT+Ag)/Decklack |
| 4 | BP-Substrat/Primer + 0,75% SBA (BIT+Ag)+0,75% AGT2 (Ag)/Decklack |
| 5 | BP-Substrat/Decklack + 0,75% SBA (BIT+Ag)+0,75% AGT2 (Ag) |
| 6a | BP-Substrat/Primer/Decklack + 0,75% SBA (BIT+Ag)+0,75% AGT2 (Ag) |
| 6b | BP-Substrat/Primer/Decklack + 0,5% SBA (BIT+Ag)+0,5% AGT2 (Ag) |
| 7 | Hybrid-Substrat/Decklack + 0,5% SBA (BIT+Ag)+0,5% AGT2 (Ag) |
| 8a | BP-Substrat/Primer + 0,75% SBA (BIT+Ag)/Decklack+0,75% AGT2 (Ag) |
| 8b | BP-Substrat/Primer + 0,5% SBA (BIT+Ag)/Decklack+0,5% AGT2 (Ag) |

| SBA = | ACTICIDE®SBA von Thor GmbH (Speyer), Zubereitung aus 1,2-Benzisothiazol-3(2H)-on (BIT) und Silbernitrat |
| | Anmerkung: Für ACTICIDE®SBA wird auch der Produktname ACTICIDE®SBI verwendet, wobei die Inhaltsstoffe der Zubereitung für ACTICIDE®SBA und ACTICIDE®SBI identisch sind |
| AGT2 = | ACTICIDE®AGT2 von Thor GmbH (Speyer), Biozid auf der Basis von Silberchlorid |
| BP = | Baumwollpapier |
| Primer = | wasserbasierte Zubereitung von synthetischen Kunstharzen |
| Decklack = | UV-trocknender Decklack |

Tabelle 2

| Probe Nr. | antimikrobielle Reduktion (%) | | | | | |
| | AATCC 100 Konz. 0,75% | | JIS Z 2801 Konzentration 0,5% | | | |
| | Escherichia coli | Staphylococcus aureus | Escherichia coli | Staphylococcus aureus | Aspergillus niger | Pseudomonas aerugino- |
| 1 | -17788,20 | n.b. | | | | |
| 2 | -17294,96 | 51,75 | | | | |
| 3a | >99,99 | 99,53 | | | | |
| 3b | | | 0,00 | 93,30 | 100,00 | 100,00 |
| 4 | >99,99 | 99,81 | | | | |
| 5 | >99,99 | 98,12 | | | | |
| 6a | >99,99 | 99,91 | | | | |
| 6b | | | 100,00 | 93,40 | 99,39 | 100,00 |
| 7 | | | 100,00 | 96,60 | 100,00 | 100,00 |
| 8a | >99,99 | 99,98 | | | | |
| 8b | | | 99,96 | 93,10 | 99,00 | 100,00 |
| n.b. = nicht bestimmt | | | | | | |

$$\text{antimikrobielle Reduktion (\%)} = \frac{(T_0 - Tx)}{T_0} \times 100$$

$T_0$ = Keimzahl/Prüfling, unmittelbar nach dem Beeimpfen
$Tx$ = Keimzahl/Prüfling, nach 24 h Lagerung

Probe-Nr. 1 enthielt als antimikrobielles Mittel nur Silberchlorid (0,75 % AGT2 im Decklack). Für Escherichia coli betrug die antimikrobielle "Reduktion" -17.788,20 %, d.h. es gab ein starkes Wachstum von Escherichia coli auf dieser Probe. Gleiches gilt für Probe Nr. 2, die antimikrobielle Mittel im Papiersubstrat enthielt. Durch die Lackierung mit einem UV-trocknenden Decklack ging die antimikrobielle Wirkung jedoch verloren bzw. konnte sich nicht entfalten.

Bessere Ergebnisse wurden für die Proben 3a und 3b erzielt, die die antimikrobiellen Mittel BIT und Silbernitrat (0,75 % bzw. 0,5 % SBA im Primer) enthielten. Die höher konzentrierte Probe 3a zeigte eine gute antimikrobielle Wirkung sowohl gegen Escherichia coli als auch gegen Staphylococcus aureus, während die niedriger konzentrierte Probe 3b zumindest eine sehr gute Wirkung gegen Aspergillus niger und Pseudomonas aeruginosa zeigte, während die antimikrobielle Wirkung gegen Staphylococcus aureus noch befriedigend war. Eine antimikrobielle Reduktion von Escherichia coli hingegen konnte nicht erreicht werden.

Die übrigen Proben 4 bis 8b enthielten alle drei verschiedene antimikrobielle Mittel, nämlich BIT, Silbernitrat und Silberchlorid (SBA und AGT2 in unterschiedlichen Konzentrationen), teilweise in der Primerschicht, teilweise in der Decklackschicht und teilweise auf beide Schichten verteilt. Sämtliche Proben mit drei verschiedenen antimikrobiellen Mitteln wiesen eine gute antimikrobielle Wirksamkeit gegen sämtliche getesteten Keime auf. Bei der geringeren Konzentration an antimikrobiellen Mitteln ist erkennbar, dass durch das synergistische Zusammenwirken des ersten, des zweiten und des dritten antimikrobiellen Mittels eine beträchtliche Steigerung der Wirksamkeit erreicht wird. Insbesondere konnte in den Proben 6b, 7 und 8b auch eine hervorragende Wirksamkeit gegen Escherichia coli erreicht werden, während mithilfe von nur 2 verschiedenen antimikrobiellen Mitteln (Probe 3b) keine Wirksamkeit gegen Escherichia coli erreicht werden konnte. Probe 3a, die sich von Probe 3b nur durch die höhere Konzentration der antimikrobiellen Mittel unterschied, war auch gegen Escherichia coli sehr gut wirksam. Insgesamt waren dank des synergistischen Zusammenwirkens des ersten antimikrobiellen Mittels BIT und mindestens eines weiteren Silber enthaltenden, antimikrobiellen Mittels, nur geringe Konzentrationen erforderlich, um eine hervorragende antimikrobielle Reduktion der aufgeimpften Keime zu erreichen.

Nachfolgend werden beispielhafte Rezepturen für die erfindungsgemäßen biozidien Schichten angeführt:

Beispiel A: wasserbasierter Lack (Primer)

| Komponente | Hersteller | Funktion/chemische Bezeichnung | Gew.-% |
|---|---|---|---|
| Neocryl A-1091 | DSM | anionische Acry.-Styrol-Emulsion | 70,0 |
| Neocryl BT-21 | DSM | Acrylat-Dispersion | 21,0 |
| Wasser | | Verdünner | 7,4 |
| DMEA | Huntsman | Dimethyletanolamin, pH-Werte einstellen | 0,3 |
| Byk 346 | Byk | Silikontensid, Benetzungsmittel | 0,3 |
| Dehydran 1293 | Cognis | Entschäumer | 0,5 |
| SBA | Thor | BIT + Ag | 0,5 |
| | | | 100,0 |

Beispiel B: wasserbasierter Lack mit Vernetzer

| Komponente | Hersteller | Funktion/chemische Bezeichnung | Gew.-% |
|---|---|---|---|
| Neocryl A-1091 | DSM | anionische Acryl-Styrol-Emulsion | 67,0 |
| Neocryl BT-21 | DSM | Acrylat-Dispersion | 21,0 |
| Wasser | | Verdünner | 7,4 |
| DMEA | Huntsman | Dimethyletanolamin, pH-Werte einstellen | 0,3 |
| Byk 346 | Byk | Silikontensid, Benetzungsmittel | 0,3 |
| Dehydran 1293 | Gognis | Entschäumer | 0,5 |
| SBA | Thor | BIT + Ag | 0,5 |
| Vernetzer | | | 3,0 |
| | | | 100,0 |

Beispiel C: UV-Lack (radikalisch härtend)

| Komponente | Hersteller | Funktion/chemische Bezeichnung | Gew.-% |
|---|---|---|---|
| Laromer PE 55 F | BASF | Polyesteracrylat | 24,0 |
| Ebecryl 8w | Cytec | Amin mod. Polyesteracrylat | 20,0 |
| Laromer TPGDA | BASF | UV-Verdünner, Tripropylenglycoldiacrylat | 12,0 |

(fortgesetzt)

| Komponente | Hersteller | Funktion/chemische Bezeichnung | Gew.-% |
|---|---|---|---|
| Laromer HDDA | BASF | UV-Verdünner | 12,3 |
| Tego Dispers 655 | Evonik | Netz-und Dispergieradditiv | 2,0 |
| Calciumcaronat | OMYA | Mattierungsmittel | 20,0 |
| Ebecryl P 116 | Cytec | Katalysator | 4,0 |
| Tego Rad 2300 | Evonik | Benetzungsmittel | 1,0 |
| Tego Airex 920 | Evonik | Entschäumer | 1,0 |
| Irgacure 1173 | BASF | Photoinitiator | 3,0 |
| Irgacure 819 | BASF | Photoinitiator | 0,2 |
| AGT2 | Thor | Ag | 0,5 |
| | | | 100,0 |

Es sei angemerkt, dass die erfindungsgemäße schmutzabweisende und antimikrobielle Beschichtung auch auf einem Sicherheitspapier aufgebracht werden kann, das im Wesentlichen bereits alle für das Sicherheitspapier vorgesehenen Sicherheitselemente und Aufdrucke aufweist. In einem solchen Fall wird auf das im Wesentlichen fertiggestellte Sicherheitspapier bzw. Wertdokument in einem letzten Verfahrensschritt die erfindungsgemäße Beschichtung aufgebracht. Auf diese Art und Weise kann die antimikrobielle Beschichtung erst kurz vor In-Verkehr-Bringung des Sicherheitspapiers bzw. Wertdokuments aufgebracht werden, was insbesondere bei antimikrobiellen Mitteln mit weniger langer Haltbarkeit von großem Vorteil sein kann.

Schließlich ist noch anzumerken, dass die erfindungsgemäß eingesetzten antimikrobiellen Mittel auch verkapselt sein können, was sich vorteilhaft auf die Lebensdauer und damit die Dauer der antimikrobiellen Wirkung des antimikrobiellen Mittels auswirkt. Das antimikrobielle Mittel wird dazu in eine Mikrokapsel nach einem gängigen Verfahren des Standes der Technik eingebracht. Das so mikroverkapselte antimikrobielle Mittel ist dann Teil der erfindungsgemäßen antimikrobiellen Beschichtung, deren antimikrobielle Wirkung gegenüber einer antimikrobiellen Beschichtung mit denselben antimikrobiellen Mitteln, aber ohne Mikroverkapselung, in vorteilhafter Weise zeitlich verlängert wird.

**Patentansprüche**

**1.** Sicherheitspapier (1) zur Herstellung von Wertdokumenten, wie Banknoten, Ausweisdokumenten oder Urkunden, mit einem flächigen Substrat (2), das zumindest teilweise mit einer schmutzabweisenden, antimikrobiellen Beschichtung (3, 4) versehen ist, **dadurch gekennzeichnet, dass** die Beschichtung (3, 4) mindestens ein erstes antimikrobielles Mittel (10), ein zweites antimikrobielles Mittel (11) und ein drittes antimikrobielles Mittel (12) aufweist, wobei das erste antimikrobielle Mittel 1,2-Benzisothiazol-3(2H)-on (BIT) ist, das zweite antimikrobielle Mittel (11) Silber enthält und das dritte antimikrobielle Mittel (12) Silber enthält und von dem zweiten antimikrobiellen Mittel (11) verschieden ist.

**2.** Sicherheitspapier (1) nach Anspruch 1, **dadurch gekennzeichnet, dass** die Beschichtung (3, 4) mindestens eine untere Schicht (5) und eine obere Schicht (6) aufweist, wobei die untere Schicht zwischen dem Substrat (2) und der oberen Schicht angeordnet ist, und dass das erste antimikrobielle Mittel (10) und das zweite antimikrobielle Mittel (11) in der gleichen und/oder in verschiedenen Schichten (5, 6) enthalten sind.

**3.** Sicherheitspapier (1) nach Anspruch 2, **dadurch gekennzeichnet, dass** das erste und das zweite antimikrobielle Mittel beide in der unteren Schicht (5) oder beide in der oberen Schicht (6) enthalten sind oder eines der antimikrobiellen Mittel in der unteren Schicht (5) und eines der antimikrobiellen Mittel in der oberen Schicht (6) enthalten ist.

**4.** Sicherheitspapier nach einem der Ansprüche 1 bis 3, **dadurch gekennzeichnet, dass** das dritte antimikrobielle Mittel (12) in der gleichen Schicht wie das erste antimikrobielle Mittel (10) und/oder das zweite antimikrobielle Mittel (11) oder in einer weiteren Schicht (7) der Beschichtung (3, 4) enthalten ist.

**5.** Sicherheitspapier (1) nach einem der Ansprüche 1 bis 3, **dadurch gekennzeichnet, dass** das erste und das zweite antimikrobielle Mittel (10, 11) in der gleichen Schicht der Beschichtung (3, 4) enthalten sind, und das dritte antimikrobielle Mittel (12) in einer davon verschiedenen Schicht der Beschichtung (3, 4) enthalten ist.

6. Sicherheitspapier (1) nach einem der Ansprüche 1 bis 4, **dadurch gekennzeichnet, dass** das erste und das zweite und das dritte antimikrobielle Mittel (10, 11, 12) in der gleichen Schicht der Beschichtung (3, 4) enthalten sind.

7. Sicherheitspapier (1) nach einem der Ansprüche 2 bis 6, **dadurch gekennzeichnet, dass** das erste antimikrobielle Mittel (10) in der unteren Schicht (5) enthalten ist.

8. Sicherheitspapier (1) nach einem der Ansprüche 1 bis 7, **dadurch gekennzeichnet, dass** das erste und das zweite antimikrobielle Mittel (10, 11) in der unteren Schicht (5) enthalten sind, und das dritte antimikrobielle Mittel (12) in der oberen Schicht (6) enthalten ist.

9. Sicherheitspapier (1) nach einem der Ansprüche 1 bis 8, **dadurch gekennzeichnet, dass** das zweite antimikrobielle Mittel (11) ausgewählt ist aus der Gruppe, die aus Silbernitrat, Silberchlorid, Silber in Zeolith/ Glas und Silber auf Titandioxid besteht, und bevorzugt Silbernitrat ist.

10. Sicherheitspapier (1) nach einem der Ansprüche 1 bis 9, **dadurch gekennzeichnet, dass** das dritte antimikrobielle Mittel (12) von dem zweiten antimikrobiellen Mittel (11) verschieden ist und ausgewählt ist aus der Gruppe, die aus Silbernitrat, Silberchlorid, Silber auf Zeolith/Glas und Silber auf Titandioxid besteht, und bevorzugt Silberchlorid ist.

11. Sicherheitspapier (1) nach einem der Ansprüche 2 bis 10, **dadurch gekennzeichnet, dass** die untere Schicht (5) eine Primerschicht auf der Basis einer physikalisch trocknenden Zusammensetzung oder auf der Basis eines Hybridsystems ist, wobei die untere Schicht (5) bevorzugt aus einer Zusammensetzung besteht, die Acrylate und/oder Polyesteracrylate und/oder Urethanacrylate und/oder Polyesterpolyurethane und/oder Polyetherpolyurethane und/oder Acryl-Styrol-Polyurethane aufweist.

12. Sicherheitspapier (1) nach einem der Ansprüche 1 bis 11, **dadurch gekennzeichnet, dass** die Beschichtung (3, 4) oder die obere Schicht (6) der Beschichtung (3, 4) eine Schutzschicht auf der Basis einer strahlungshärtenden Zusammensetzung oder auf der Basis eines Hybridsystems ist, wobei die Beschichtung (3, 4) bevorzugt oder die obere Schicht (6) ein kationisch vernetzender UV-Lack oder ein radikalisch vernetzender UV-Lack ist.

13. Wertdokument, wie Banknote, Ausweisdokument oder Urkunde, **dadurch gekennzeichnet, dass** es ein Sicherheitspapier (1) nach einem der Ansprüche 1 bis 12 aufweist.

14. Verfahren zur Herstellung eines Sicherheitspapiers (1), insbesondere für ein Wertdokument, wie eine Banknote, ein Ausweisdokument oder eine Urkunde, folgende Schritte aufweisend:

  - Bereitstellen eines flächigen Substrats (2) mit einer ersten Substratoberfläche (21) und einer zweiten Substratoberfläche (22),
  - Auftragen einer schmutzabweisenden, antimikrobiellen Beschichtung (3) auf die erste Substratoberfläche (21) und/oder einer schmutzabweisenden, antimikrobiellen Beschichtung (4) auf die zweite Substratoberfläche (22), wobei die Beschichtung (3, 4) eine Deckschicht (6) oder eine Deckschicht (6) und eine untere Schicht (5) zwischen dem Substrat (2) und der Deckschicht (6) aufweist, durch optionales Auftragen einer Beschichtungszusammensetzung zur Erzeugung der unteren Schicht (5) auf das Substrat (2), und Auftragen einer Beschichtungszusammensetzung zur Erzeugung der Deckschicht (6) auf das Substrat (2) oder die untere Schicht (5), und wobei die Beschichtung (3, 4) mindestens ein erstes antimikrobielles Mittel (10) und ein zweites antimikrobielles Mittel (11) aufweist, **dadurch gekennzeichnet, dass** die Beschichtung (3, 4) die in einem der Ansprüche 1 bis 12 angegebenen Merkmale aufweist, wobei die erste und/oder zweite Substratoberfläche (21, 22) und/oder eine oder beide Oberflächen der optionalen unteren Schicht (5) und/oder eine oder beide Oberflächen der Deckschicht (6) bedruckt werden.

15. Verfahren zur Herstellung eines Wertdokuments, wie einer Banknote, eines Ausweisdokumentes oder einer Urkunde, **dadurch gekennzeichnet, dass** ein Sicherheitspapier (1) nach einem der Ansprüche 1 bis 12 mit mindestens einem Sicherheitselement ausgestattet wird.

**Claims**

1. A security paper (1) for manufacturing value documents, such as banknotes, identity documents or deeds, with a planar substrate (2), which is equipped at least partly with a dirt-repellent, antimicrobial coating (3, 4), **characterized in that** the coating (3, 4) has at least a first antimicrobial agent (10) and a second antimicrobial agent (11) and a third antimicrobial agent (12), wherein the first antimicrobial agent is 1,2-benzisothiazol-3(2H)-one (BIT), the second antimicrobial agent (11) contains silver and the third antimicrobial agent (12) contains silver and is different from the second antimicrobial agent (11).

2. The security paper (1) according to claim 1, **characterized in that** the coating (3, 4) has at least a lower layer (5) and an upper layer (6), wherein the lower layer is arranged between the substrate (2) and the upper layer, and that the first antimicrobial agent (10) and the second antimicrobial agent (11) are contained in the same and/or in different layers (5, 6).

3. The security paper (1) according to claim 2, **characterized in that** the first and the second antimicrobial agents are both contained in the lower layer (5) or both contained in the upper layer (6) or one of the antimicrobial agents is contained in the lower layer (5) and one of the antimicrobial agents is contained in the upper layer (6).

4. The security paper (1) according to any one of claims 1 to 3, **characterized in that** the third antimicrobial agent (12) is contained in the same layer as the first antimicrobial agent (10) and/or the second antimicrobial agent (11) or in a further layer (7) of the coating (3,4).

5. The security paper (1) according to any one of claims 1 to 3, **characterized in that** the first and the second antimicrobial agents (10,11) are contained in the same layer of the coating (3, 4), and the third antimicrobial agent (12) in layer of the coating (3, 4) different therefrom.

6. The security paper (1) according to any one of claims 1 to 4, **characterized in that** the first and the second and the third antimicrobial agents (10, 11, 12) are contained in the same layer of the coating (3, 4).

7. The security paper (1) according to any one of claims 2 to 6, **characterized in that** the first antimicrobial agent (10) is contained in the lower layer (5).

8. The security paper (1) according to any one of claims 1 to 7, **characterized in that** the first and the second antimicrobial agents (10, 11) are contained in the lower layer (5), and the third antimicrobial agent (12) is contained in the upper layer (6).

9. The security paper (1) according to any one of claims 1 to 8, **characterized in that** the second antimicrobial agent (11) is chosen from the group consisting of silver nitrate, silver chloride, silver in zeolite / glass and silver on titanium dioxide, and is preferably silver nitrate.

10. The security paper (1) according to any one of claims 1 to 9, **characterized in that** the third antimicrobial agent (12) is different from the second antimicrobial agent (11) and is chosen from the group consisting of silver nitrate, silver chloride, silver on zeolite / glass and silver on titanium dioxide, and is preferably silver chloride.

11. The security paper (1) according to any one of claims 2 to 10, **characterized in that** the lower layer (5) is a primer layer on the basis of a physically drying composition or on the basis of a hybrid system, wherein the lower layer (5) preferably consists of a composition having acrylates and/or polyester acrylates and/or urethane acrylates and/or polyester polyurethanes and/or polyether polyurethanes and/or acrylic-styrene polyurethanes.

12. The security paper (1) according to any one of claims 1 to 11, **characterized in that** the coating (3, 4) or the upper layer (6) of the coating (3, 4) is a protective layer on the basis of a radiation-curable composition or on the basis of a hybrid system, wherein the coating (3, 4) preferably or the upper layer (6) is a cationically crosslinking UV lacquer or a radically crosslinking UV lacquer.

13. A value document, such as a banknote, identity document or deed, **characterized in that** it has a security paper (1) according to any one of claims 1 to 12.

14. A method for manufacturing a security paper (1), in particular for a value document, such as a banknote, an identity document or a deed, having the following steps of:

- making available a flat substrate (2) with a first substrate surface (21) and a second substrate surface (22),
- applying a dirt-repellent, antimicrobial coating (3) to the first substrate surface (21) and/or a dirt-repellent, antimicrobial coating (4) to the second substrate surface (22), wherein the coating (3, 4) has a cover layer (6) or a cover layer (6) and a lower layer (5) between the substrate (2) and the cover layer (6), by optionally applying a coating composition for producing the lower layer (5) to the substrate (2), and applying a coating composition for producing the cover layer (6) to the substrate (2) or the lower layer (5), and wherein the coating (3, 4) has at least a first antimicrobial agent (10) and a second antimicrobial agent (11), **characterized in that** the coating (3, 4) has the features specified in any one of claims 1 to 12, wherein the first and/or second substrate surface (21, 22) and/or one or both surfaces of the optional lower layer (5) and/or one or both surfaces of the cover layer (6) are printed.

15. A method for producing a value document, such as a banknote, an identity document or a deed, **characterized in that** a security paper (1) according any one of claims 1 to 12 is equipped with at least one security element.

## Revendications

1. Papier de sécurité (1) destiné à la fabrication de documents de valeur tels que billets de banque, documents d'identification ou actes, comprenant un substrat (2) plan pourvu au moins partiellement d'un revêtement (3, 4) antimicrobien résistant aux salissures, **caractérisé en ce que** le revêtement (3, 4) comporte au moins un premier agent antimicrobien (10), un deuxième agent antimicrobien (11) et un troisième agent antimicrobien (12), cependant que le premier agent antimicrobien est de la 1,2-benzisothiazol-3(2H)-one (BIT), que le deuxième agent antimicrobien (11) contient de l'argent, et que le troisième agent antimicrobien (12) contient de l'argent et est différent du deuxième agent antimicrobien (11).

2. Papier de sécurité (1) selon la revendication 1, **caractérisé en ce que** le revêtement (3, 4) comporte au moins une couche inférieure (5) et une couche supérieure (6), cependant que la couche inférieure est agencée entre le substrat (2) et la couche supérieure, et que le premier agent antimicrobien (10) et le deuxième agent antimicrobien (11) sont contenus dans la même et/ou dans différentes couches (5, 6).

3. Papier de sécurité (1) selon la revendication 2, **caractérisé en ce que** le premier et le deuxième agent antimicrobien sont tous les deux contenus dans la couche inférieure (5) ou tous les deux contenus dans la couche supérieure (6), ou qu'un des agents antimicrobiens est contenu dans la couche inférieure (5) et un des agents antimicrobiens est contenu dans la couche supérieure (6).

4. Papier de sécurité selon une des revendications de 1 à 3, **caractérisé en ce que** le troisième agent antimicrobien (12) est contenu dans la même couche que le premier agent antimicrobien (10) et/ou que le deuxième agent antimicrobien (11), ou ou dans une autre couche (7) du revêtement (3, 4).

5. Papier de sécurité (1) selon une des revendications de 1 à 3, **caractérisé en ce que** le premier et le deuxième agent antimicrobien (10, 11) sont contenus dans la même couche du revêtement (3, 4), et que le troisième agent antimicrobien (12) est contenu dans une couche du revêtement (3, 4) qui en est différente.

6. Papier de sécurité (1) selon une des revendications de 1 à 4, **caractérisé en ce que** le premier et le deuxième et le troisième agent antimicrobien (10, 11, 12) sont contenus dans la même couche du revêtement (3, 4).

7. Papier de sécurité (1) selon une des revendications de 2 à 6, **caractérisé en ce que** le premier agent antimicrobien (10) est contenu dans la couche inférieure (5).

8. Papier de sécurité (1) selon une des revendications de 1 à 7, **caractérisé en ce que** le premier et le deuxième et agent antimicrobien (10, 11) sont contenus dans la couche inférieure (5), et que le troisième agent antimicrobien (12) est contenu dans la couche supérieure (6).

9. Papier de sécurité (1) selon une des revendications de 1 à 8, **caractérisé en ce que** le deuxième agent antimicrobien (11) est choisi dans le groupe composé de nitrate d'argent, de chlorure d'argent, d'argent dans zéolite/verre et argent sur dioxyde de titane, et est de préférence du nitrate d'argent.

10. Papier de sécurité (1) selon une des revendications de 1 à 9, **caractérisé en ce que** le troisième agent antimicrobien (12) est différent du deuxième agent antimicrobien (11) et est choisi dans le groupe composé de nitrate d'argent, de chlorure d'argent, d'argent sur zéolite/verre et argent sur dioxyde de titane, et est de préférence du chlorure d'argent.

11. Papier de sécurité (1) selon une des revendications de 2 à 10, **caractérisé en ce que** la couche inférieure (5) est une couche d'apprêt sur la base d'une composition à séchage physique ou sur la base d'un système hybride, cependant que la couche inférieure (5) consiste de préférence en une composition qui comporte des acrylates et/ou des acrylates de polyester et/ou des acrylates d'uréthane et/ou des polyesters polyuréthanes, et/ou des polyéthers polyuréthanes et/ou des polyuréthanes acryliques styrènes.

12. Papier de sécurité (1) selon une des revendications de 1 à 11, **caractérisé en ce que** le revêtement (3, 4) ou la couche supérieure (6) du revêtement (3, 4) est une couche de protection sur la base d'une composition durcissable par rayonnement ou sur la base d'un système hybride, cependant que le revêtement (3, 4) de préférence ou la couche supérieure (6) est un vernis UV à réticulation cationique ou un vernis UV à réticulation radicalaire.

13. Document de valeur tel que billet de banque, document d'identification ou acte, **caractérisé en ce qu'**il comporte un papier de sécurité (1) selon une des revendications de 1 à 12.

14. Procédé de fabrication d'un papier de sécurité (1), en particulier pour un document de valeur tel qu'un billet de banque, un document d'identification ou un acte, comprenant les étapes suivantes :

   - mise à disposition d'un substrat (2) plan ayant une première surface de substrat (21) et une deuxième surface de substrat (22),
   - application d'un revêtement (3) antimicrobien résistant aux salissures sur la première surface de substrat (21) et/ou d'un revêtement (4) antimicrobien résistant aux salissures sur la deuxième surface de substrat (22), cependant que le revêtement (3, 4) comporte une couche de recouvrement (6) ou une couche de recouvrement (6) et une couche inférieure (5) entre le substrat (2) et la couche de recouvrement (6), par application optionnelle d'une composition de revêtement pour générer la couche inférieure (5) sur le substrat (2), et application d'une composition de revêtement pour générer la couche de recouvrement (6) sur le substrat (2) ou la couche inférieure (5), et cependant que le revêtement (3, 4) comporte au moins un premier agent antimicrobien (10) et un deuxième agent antimicrobien (11), **caractérisé en ce que** le revêtement (3, 4) présente les caractéristiques indiquées dans une des revendications de 1 à 12, cependant que la première et/ou la deuxième surface de substrat (21, 22) et/ou une ou les deux surfaces de la couche inférieure (5) optionnelle et/ou une ou les deux surfaces de la couche de recouvrement (6) sont imprimées.

15. Procédé de fabrication d'un document de valeur tel qu'un billet de banque, un document d'identification ou un acte, **caractérisé en ce qu'**un papier de sécurité (1) selon une des revendications de 1 à 12 est pourvu d'au moins un élément de sécurité.

EP 2 634 309 B1

FIG 1

1

10   11        21           8

3 {                                        6

△   ▭              △  ▭         5

▭   ▭  ▭        ▭        2

4 {  △ ▭ ○      △ ▭ ○      ▭    22

10 11 12    41  10 11 12    8

FIG 2

1

10 11 12 51        8  21    61

3 {  ▭      ▭  ▭  ▭        6

△ ▭ ○   △ ▭ ○  △ ▭ ○     5

▭        2

▭  ▭   ▭ ▭      ▭      5

4 {  △ ▭ ○   △ ▭ ○   △ ▭ ○   6

10 11 12  51    61  22    8

18

# FIG 3

# FIG 4

**EP 2 634 309 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0799928 A2
- GB 2480275 A
- WO 2004072378 A1
- US 20080305702 A1
- WO 2006049478 A1
- DE 102009054406 A1
- EP 2314459 A1
- US 20050031838 A1
- US 5660919 A
- DE 202005020859 U1